# EUROPÄISCHE PATENTSCHRIFT

(11) **EP 3 716 820 B1**
(45) Veröffentlichungstag und Bekanntmachung des Hinweises auf die Patenterteilung: **29.12.2021**
(21) Anmeldenummer: 17817686.3
(22) Anmeldetag: 30.11.2017
(51) Int. Cl.: A47J 27/04, A47J 27/16

(54) **VORRICHTUNG UND VERFAHREN ZUM AUFBEREITEN VON IN EINEM GEFÄSS ANGEORDNETEN LEBENSMITTELN**
DEVICE AND METHOD FOR PREPARING FOODS ARRANGED IN A VESSEL
DISPOSITIF ET PROCÉDÉ DE PRÉPARATION DE DENRÉES ALIMENTAIRES DISPOSÉES DANS UN RÉCIPIENT

(43) Veröffentlichungstag der Anmeldung: 07.10.2020
(73) Patentinhaber: Carogusto AG, 8580 Amriswil (CH)
(72) Erfinder: GRENDELMEIER, Thomas, 8634 Hombrechtikon (CH); SCHENK, Philipp, 9215 Schönenberg (CH); SCHMUTZ, Lukas, 3014 Bern (CH)
(74) Vertreter: Patent- und Rechtsanwälte Behrmann Wagner PartG mbB
(86) Internationale Anmeldenummer: PCT/EP2017/080982
(87) Internationale Veröffentlichungsnummer: WO 2019/105554

(56) Entgegenhaltungen:
- DE-A1- 3 644 519
- DE-A1-102015 221 005
- US-A- 4 233 891
- US-A1- 2009 252 855

## Beschreibung

Die Erfindung betrifft eine Vorrichtung zum Aufbereiten von in einem Gefäß aufgenommenen (angeordneten) Lebensmitteln, insbesondere von Fertiggerichten, gemäß dem Oberbegriff des Anspruchs 1, umfassend eine, bevorzugt in einem Gehäuse angeordnete, Dampferzeugungseinheit zum Erzeugen von Dampf, sowie eine mit der Dampferzeugungseinheit dampfleitend über eine Dampfversorgungsleitung verbundene Dampfzuführeinheit mit einer mindestens einer Dampfabgabeöffnung aufweisenden Dampfsonde.

Ferner betrifft die Erfindung ein Verfahren zum Betreiben einer derartigen Vorrichtung gemäß Anspruch 14.

Die DE 10 2015 221 005 A1 beschreibt eine Vorrichtung zum Aufbereiten von in einem Gefäß angeordneten Lebensmitteln mit einer fest mit einer Dampfzuführleitung verbundenen Dampfzuführeinheit, die eine Mehrzahl von Dampfsonden zum Einbringen von Dampf in ein zu erwärmendes Fertiggericht aufweist, wobei die Dampfzuführeinheit für eine bessere Dampfverteilung und zum Aufrühren des Fertiggerichtes um eine Rotationsachse rotierbar ist. Die bekannte Vorrichtung hat sich bewährt. Es besteht jedoch das Bedürfnis, die Reinigbarkeit komfortabler zu gestalten.

Ausgehend von dem vorgenannten Stand der Technik liegt der Erfindung daher die Aufgabe zugrunde eine erleichterte reinigbare Vorrichtung zum Aufbereiten von in einem Gefäß angeordneten Lebensmitteln sowie ein entsprechend verbessertes Verfahren zum Betreiben einer solchen Vorrichtung anzugeben.

Diese Aufgabe wird hinsichtlich der Vorrichtung mit den Merkmalen des Anspruchs 1 gelöst, d.h. bei einer gattungsgemäßen Vorrichtung dadurch, dass die Vorrichtung eine Verriegelungsmittel umfassende Kupplungseinrichtung zum, insbesondere werkzeuglosen, lösbaren Verbinden der Dampfzuführeinheit mit der Dampfversorgungsleitung aufweist. Bevorzugt umfasst die Dampfzuführeinheit hierzu einen, insbesondere langgestreckten Verbindungsabschnitt zum, insbesondere translatorischen, Koppeln mit der, bevorzugt Einführen in die Kupplungseinrichtung.

Hinsichtlich des Verfahrens wird die Aufgabe mit den Merkmalen des Anspruchs 14 gelöst, d.h. einem gattungsgemäßen Verfahren dadurch, dass die Dampfzuführeinheit nach, insbesondere manuellem, Lösen (Entsperren) der Verriegelungsmittel von der Dampfzuführleitung getrennt und bevorzugt danach gereinigt wird, insbesondere in einer Spülmaschine.

Vorteilhafte Weiterbildungen der Erfindung sind in den Unteransprüchen angegeben. In den Rahmen der Erfindung fallen zumindest zwei von in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

Der Erfindung liegt der Gedanke zugrunde, die Dampfzuführeinheit nicht dauerhaft fest mit der Dampfversorgungsleitung zu verbinden sondern lösbar an dieser anzuordnen, um die Dampfzuführeinheit nach Aufbereitung, insbesondere Erhitzen einer entsprechenden Anzahl von Lebensmitteln, bevorzugt Fertiggerichten nicht wie bisher an der Vorrichtung bzw. einem Vorrichtungsgehäuse manuell zu reinigen, sondern lösgelöst von der Dampfversorgungsleitung, beispielsweise automatisiert in einer im Gastronomiebereich oder im Haushaltsbereich in der Regel vorhandenen Spülmaschine. Hierdurch ist eine deutlich effizientere und komfortablere Reinigung möglich.

Zur Realisierung der Erfindung umfasst die Vorrichtung eine Kupplungseinrichtung zum lösbaren Verbinden der Dampfzuführeinheit mit der Dampfversorgungsleitung, wobei die Kupplungseinrichtung Verriegelungsmittel umfasst, mit denen die Dampfzuführeinheit in einer Montage- bzw. Fixierposition verriegelbar bzw. sicherbar ist, insbesondere gegen ein Abziehen entgegen einer Montage- bzw. Fixierrichtung. Bevorzugt ist die Kupplungseinrichtung derart ausgebildet, dass die Dampfzuführeinheit durch eine translatorische Montagebewegung montierbar und fixierbar, insbesondere in die Kupplungseinrichtung mit einem Verbindungsabschnitt axial einführbar ist, bevorzugt entlang einer in Weiterbildung vorgesehenen, später noch zu erläuternden Rotationsachse, um die Dampfzuführeinheit gemäß einer bevorzugten Ausführungsform zur Verbesserung der Dampfverteilung, bevorzugt gemeinsam mit der Kopplungseinrichtung rotierbar ist. Alternative Ausgestaltungen der Kupplungseinrichtung sowie von deren Verriegelungsmitteln sind umsetzbar, beispielsweise in der Form eines Schnellverschlusses zur werkzeuglosen Montage, beispielsweise in Form eines Bajonettverschlusses.

Besonders bevorzugt ist eine Ausführungsform der erfindungsgemäßen Vorrichtung und des erfindungsgemäßen Verfahrens, bei der zumindest ein, die Dampfsonde umfassender Teilabschnitt der Dampfzuführeinheit, insbesondere die gesamte (demontierbare bzw. lösbar festlegbare) Dampfzuführeinheit, um eine Rotationsachse, insbesondere hin- und her rotierbar ist, um den Dampf im Lebensmittel besser zu verteilen und/oder um das Lebensmittel umzurühren. Insbesondere im Hinblick auf die Aufbereitung bestimmter Lebensmittel, wie Spaghetti ist es zur Vermeidung eines Aufwickelns der Lebensmittel um die mindestens eine, bevorzugt die mehreren Dampfsonden bevorzugt, wenn diese Rotationsbewegung als Hin- und Herbewegung, also als alternierende Bewegung in zwei einander entgegengesetzte Umdrehungsrichtungen realisiert ist. Bevorzugt ist es dabei, wenn die bevorzugt als Vertikalachse ausgebildete Rotationsachse gleichzeitig eine Montageachse darstellt, in der die Dampfzuführeinheit translatorisch zum Verbinden mit der Kupplungseinrichtung und zum Verriegeln verstellt werden muss sowie dann entgegengesetzt zu Zwecken der Ablösung bzw. Demontage. Um die Dampfzuführeinheit um die Rotationsachse rotieren zu können, umfasst die Kupplungseinrichtung entsprechende Drehmomentübertragungsmittel, um somit eine drehmomentübertragende Wirkverbindung zu einem, bevorzugt in einem Gehäuse der Vorrichtung angeordneten, ganz besonders bevorzugt elektrischen Antriebsmotor zu bilden. Besonders bevorzugt ist es, wenn die Drehmomentübertragungsmittel eine, insbesondere zentrische Aufnahme aufweisen, die im montierten Zustand der Dampfzuführeinheit bezogen auf die Rotationsachse in radialer Richtung in entsprechende, radiale Aussparungen eines vorerwähnten, insbesondere langgestreckten Verbindungsabschnitts der Dampfzuführeinheit, genauer eines Antriebsabschnittes des Verbindungsabschnittes, eingreift, um die Dampfzuführeinheit rotierend antreiben zu können. Ganz besonders bevorzugt sind die Drehmomentübertragungsmittel gleichzeitig als Getrieberad ausgebildet, bzw. weisen am Außenumfang einen Zahnkranz auf, dessen Verzahnung entsprechend drehmomentübertragend mit einem Antriebsmotor, insbesondere über mindestens ein Getrieberad oder eine Antriebsschnecke verbunden ist. Bevorzugt wirken die Drehmomentübertragungsmittel mit dem vorerwähnten, sich bevorzugt entlang der Rotationsachse erstreckenden Verbindungsabschnitt der Dampfzuführeinheit zusammen.

Ganz besonders bevorzugt ist eine Ausführungsform der Vorrichtung und des Verfahrens, bei der an der Dampfzuführeinheit, insbesondere oberhalb der Dampfsonden eine von der Dampfzuführeinheit separate Haube angeordnet ist, die zusammen mit dem (bevorzugt nicht zur Vorrichtung gehörenden) Gefäß einen Garraum bildet, indem die Dampfbeaufschlagung des Lebensmittels erfolgt. Die Haube hat dabei bevorzugt die Funktion eines Niederhalters und wird in einem Bedampfungsbetriebszustand gegen das Gefäß kraftbeaufschlagt, wobei die Dampfzuführeinheit relativ zu der Haube um die Rotationsachse rotierbar ist. Die Haube kann in Weiterbildung der Erfindung gemeinsam mit der Dampfzuführeinheit entnommen, d.h. von der Kupplungseinrichtung entfernt bzw. getrennt werden. Bevorzugt sitzt die Haube lose oder bevorzugt werkzeuglos, lösbar fixiert, auf der Dampfzuführeinheit auf und ist im an der Kupplungseinrichtung festgelegten Zustand der Dampfzuführeinheit zwischen einem die mindestens eine Dampfsonde umfassenden unteren Abschnitt der Dampfzuführeinheit und einem Vorrichtungsgehäuse, insbesondere einem Hubeinheitsgehäuse gefangen und kann nach Entfernen der Dampfzuführeinheit aus der Kupplungseinrichtung einfach durch einen Benutzer von der Dampfzuführeinheit entnommen und separat von dieser, insbesondere in einer Spülmaschine gereinigt werden. Bevorzugt ist die Haube entlang der Rotationsachse von dem vorerwähnten Verbindungsabschnitt der Dampfzuführeinheit durchsetzt.

Ganz besonders bevorzugt ist eine Ausführungsform, bei der die Verriegelungsmittel zum selbsttätigen Verriegeln, insbesondere axialen Sichern, der Dampfzuführeinheit an der Kupplungseinrichtung ausgebildet sind, und zwar durch, insbesondere translatorisches, bevorzugt manuelles Überführen der Dampfzuführeinheit in eine Fixier- bzw. Montageposition. Bevorzugt umfassen die Verriegelungsmittel hierzu Federmittel, die ein selbsttätiges Öffnen der Verriegelungsmittel beim Montagevorgang (insbesondere Einsteckvorgang des Verbindungsabschnittes in die Kupplungseinrichtung) ermöglichen, wobei die Federmittel dafür Sorge tragen, dass die Verriegelungsmittel selbsttätig wieder in einen Verriegelungszustand überführt werden, nachdem eine Soll-Montage bzw. Fixierposition der Dampfzuführeinheit in der Kupplungseinrichtung erreicht ist, in der eine dampfleitende Verbindung zu der Dampfversorgungsleitung besteht. Hierdurch ist die Vorrichtung besonders komfortabel zu bedienen. Zum Lösen müssen die Verriegelungsmittel dann bevorzugt manuell oder mittels eines Antriebs in eine Freigabe- bzw. Entriegelungsposition (Freigabezustand) überführt werden, woraufhin dann der Verbindungsabschnitt aus der Kupplungseinrichtung herausnehmbar ist.

Konkret umfassen die Verriegelungsmittel bevorzugt ein Verriegelungselement zur unmittelbaren Wechselwirkung mit der Dampfzuführeinheit, insbesondere einem an dem vorerwähnten Verbindungsabschnitt, insbesondere endseitig ausgebildeten Verriegelungsabschnitt, wobei das Verriegelungselement, bevorzugt durch Rotieren, zwischen einer die Dampfzuführeinheit gegen Entnehmen sichernden Verriegelungsposition und einer Freigabeposition verstellbar ist. So gibt das Verriegelungselement bevorzugt in einer Freigabeposition einen axialen Montage- und Demontageweg frei, der in der Verriegelungsposition versperrt wird. Bevorzugt wirkt das Verriegelungselement hierzu mit dem vorerwähnten Verrieglungsabschnitt des Verbindungsabschnitts der Dampfzuführeinheit zusammen. Bevorzugt ist es, wenn der Verriegelungsabschnitt axial von einem Drehmomentaufnahmeabschnitt des Verbindungsabschnittes, insbesondere über eine Art Rinne oder Umfangsnut getrennt ist, wobei das Verriegelungselement in seiner Verriegelungsposition in diesen Axialabstand eingreift, um die Dampfzuführeinheit gegen eine Entnahme entgegen der, bevorzugt axialen, Montagerichtung zu verhindern. Zum Verstellen des Verriegelungselementes zwischen seiner Freigabe und seiner Verriegelungsposition ist eine manuelle oder automatisierte Betätigungseinheit vorgesehen, die ganz besonders bevorzugt einen Schwenkhebel umfasst. Das Verriegelungselement ist bevorzugt in Richtung seiner Verriegelungsposition federkraftbelastet, insbesondere durch das Vorsehen einer Torsionsfeder und muss dann mittels der Betätigungseinheit entgegen der Federkraft aus der Verriegelungsposition in die Freigabeposition verstellt werden.

Insbesondere um ein Rotieren der Dampfzuführeinheit zusammen mit der Kupplungseinrichtung im montierten und gesicherten Zustand der Dampfzuführeinheit zu ermöglichen, ist in Weiterbildung der Erfindung vorgesehen, dass die Betätigungseinheit, insbesondere ein Schwenkhebel der Betätigungseinheit lösbar, d.h. nicht dauerhaft, kraftübertragend mit dem Verriegelungselement koppelbar ist und die Betätigungseinheit in der Verriegelungsposition des Verrieglungselements von dem Verriegelungselement entkoppelt ist, insbesondere von diesem beabstandet ist, wodurch das Verriegelungselement, insbesondere die gesamte Kupplungseinrichtung, zusammen mit der Dampfzuführeinheit um die Rotationsachse rotierbar ist. Anders ausgedrückt ist die Betätigungseinheit, insbesondere ein Schwenkhebel der Betätigungseinheit zwischen einer ersten und einer zweiten Verstellposition verstellbar und nicht in beiden Verstellendpositionen drehmomentübertragend mit dem Verriegelungselement gekoppelt, das Verriegelungselement ist in einer dieser Positionen frei und kann gemeinsam mit der Dampfzuführeinheit rotieren.

Besonders zweckmäßig ist es nun, wenn die Betätigungseinheit einen Verzahnungsabschnitt zum Kämmen mit einem Zahnkranz des Verriegelungselementes aufweist. Besonders bevorzugt ist es, wenn dieser Verzahnungsabschnitt in radialer Richtung bezogen auf den Zahnkranz federnd ausgebildet und/oder angeordnet ist, um bei einem denkbaren Zusammentreffen von Verzahnungsabschnitt und Zahnkranz Zahn auf Zahn ein Springen des Verzahnungsabschnittes (Zahnsegmentes) zu ermöglichen.

Um eine mögliche Zahn auf Zahn-Problematik zwischen dem Verzahnungsabschnitt der Betätigungseinheit und dem Zahnkranz des Verriegelungselementes weiter zu reduzieren, sind dem Verzahnungsabschnitt in Weiterbildung der Erfindung Synchronisationsmittel zum Synchronisieren einer Verzahnung des Verzahnungsabschnittes und einer Verzahnung des Zahnkranzes vorzusehen, wobei die Synchronisationsmittel bevorzugt durch Verstellen der Betätigungseinheit, insbesondere eines Schwenkhebels der Betätigungseinheit betätigbar sind. Die Synchronisationsmittel sind dabei bevorzugt derart ausgebildet, dass diese das Verriegelungselement, bevorzugt die gesamte Kopplungseinrichtung, ein Stück weit um die Rotationsachse verdrehen, bevor der Verzahnungsabschnitt der Betätigungseinheit in Eingriff kommt mit dem Zahnkranz des Verriegelungselementes, derart, dass die Zähne des Verzahnungsabschnittes sicher in die Zahnabstände bzw. -lücken des Zahnkranzes eingreifen.

Die Synchronisationsmittel umfassen bevorzugt ein, insbesondere federnd ausgebildetes und/oder angeordnetes, bevorzugt hakenförmiges, Synchronisationselement mit mindestens einem Synchronisationszahn zum Kämmen mit dem Zahnkranz des Verriegelungselementes oder mit einem zusammen mit diesem rotierbaren, fakultativen Antriebszahnkranz der Kupplungseinrichtung zum rotierenden Antreiben der Dampfzuführeinheit. Dabei ist der Antriebszahnkranz bevorzugt zumindest in der Verriegelungsposition des Verriegelungselementes fest zu dem Zahnkranz des Verriegelungselementes ausgerichtet, d.h. drehfest angeordnet, insbesondere über die bereits erwähnten, bevorzugt vorgesehenen Federmittel, die das Verriegelungselement dauerhaft in dessen Verriegelungsposition federkraftbeaufschlagen. Der Synchronisationszahn ist zu den Zähnen des Verzahnungsabschnittes bevorzugt um eine Strecke versetzt angeordnet, die nicht geradzahlig durch eine Zahnerstreckung eines Zahnes der Verzahnung des Verzahnungsabschnittes teilbar ist. Anders ausgedrückt entspricht dieser Abstand nicht einem Vielfachen der Zahnteilung. Diese Synchronisationsmittel sind bevorzugt derart ausgebildet, dass diese Verzahnung des Zahnkranzes durch Rotieren des Zahnkranzes mit dem Verzahnungsabschnitt der Betätigungseinheit synchronisieren, bevor letzterer mit dem Zahnkranz kämmt, d.h. in Eingriff kommt.

Die Vorrichtung umfasst in Weiterbildung der Erfindung Sensormittel, die die Betriebssicherheit gewährleisten. Bevorzugt sind dabei Sensormittel vorgesehen, mit denen ein Zustand (Verriegelungszustand und/oder Freigabezustand) der Verriegelungsmittel überwachbar ist. Diese Sensormittel sind bevorzugt mit einer Steuerung der Vorrichtung verbunden, die eine Dampfzufuhr nur dann auslöst bzw. freigibt, wenn ein Verriegelungszustand von den Sensormitteln detektiert ist bzw. wird. Alternativ oder bevorzugt zusätzlich sind Sensormittel vorgesehen, mit denen überprüfbar ist, ob (überhaupt) eine Dampfzuführeinheit lösbar in der Kupplungseinrichtung angeordnet ist, d.h. sich in einer an der Dampfversorgungsleitung angeschlossenen Montageposition befindet. Solche Sensormittel sind bevorzugt (ebenfalls) mit der Vorrichtungssteuerung verbunden, wobei eine Dampfinitiierung bzw. Freigabe nur dann erfolgt, wenn die Sensormittel das Vorhandensein bzw. eine entsprechende Anordnung der Dampfzuführeinheit detektieren.

Besonders zweckmäßig ist es, wenn den Sensormitteln, insbesondere den Sensormitteln zum Überwachen eines Zustandes der Verriegelungsmittel ein, bevorzugt kulissengeführtes, Stellelement zugeordnet ist, das durch Betätigen der Verriegelungsmittel, insbesondere durch Rotieren des Verriegelungselementes, relativ, insbesondere axial, zu einem Sensor der Sensormittel, insbesondere einem Schalter der Sensormittel verstellbar ist - im Fall des Vorsehens eines Schalters, um diesen Schalter zu betätigen und damit einen Verriegelungs- und/oder Freigabezustand der Verriegelungsmittel zu sensieren bzw. detektieren.

Die Vorrichtung umfasst bevorzugt in Weiterbildung einen Relativbewegungsantrieb, insbesondere einen Hubantrieb, zum Bewirken einer translatorischen Relativbewegung zwischen der Dampfzuführeinheit und dem Gefäß und/oder einer Gefäßaufstellfläche, wobei grundsätzlich eine aktive Verstellung von Dampfzuführeinheit und/oder Gefäß realisierbar ist. Bevorzugt ist jedoch auch eine Ausführungsform mit feststehend angeordnetem Gefäß und aktiv relativ zu dem Gefäß verstellbarer Dampfzuführeinheit. Gemäß einer besonders bevorzugten Ausführungsform wird über den Hubantrieb ein Aufsetzen einer zuvor erläuterten, in Weiterbildung der Erfindung vorgesehenen Haube auf das Gefäß und ein Niederhalten des Gefäßes bzw. einer Kraftbeaufschlagung des Gefäßes gewährleistet und zwischen Haube und Gefäß ein Garraum gebildet, in welchem die Dampfbeaufschlagung erfolgt. Bevorzugt wird mittels des Hubantriebs, eine die Kupplungseinrichtung umfassende Hubeinheit vertikal verstellt, wobei die Kupplungseinrichtung bevorzugt in einem Gehäuse der Hubeinheit angeordnet ist, ebenso wie ein, bevorzugt elektromotorischer Antrieb zum Rotieren der Kupplungseinrichtung samt darin festgelegter Dampfzuführeinheit.

Ganz besonders bevorzugt ist eine Ausführungsform, bei der die Dampfzuführeinheit mehrteilig ausgebildet ist und ein mehrere Dampfsonden aufweisendes Unterteil aufweist, das mit einem daran festgelegten Deckelteil einen Dampfverteilerraum begrenzt, in dem der Dampf auf die mehreren Dampfsonden verteilbar ist. Bevorzugt verlaufen in den Dampfverteilerraum mehrere Dampfverteilerleitungen zwischen jeweils einer der Dampfsonden und einem Dampfverteilerabschnitt einer, bevorzugt zentralen Dampfleitung in der Dampfzuführeinheit. Bevorzugt sind die Verteilerleitungen und/oder der Dampfverteilerabschnitt aus Metall ausgebildet.

Die Erfindung führt auch auf ein Verfahren, welches zum Betreiben einer zuvor im Detail beschriebenen Vorrichtung dient. Die vorrichtungsgemäßen Merkmale gelten dabei als zum Verfahren gehörig offenbart. Kern des Verfahrens ist es, dass die Dampfzuführeinheit nach, insbesondere manuellem, Lösen der Verriegelungsmittel, d.h. nach Überführen der Verriegelungsmittel in einen Freigabebetriebszustand bzw. eine Freigabeposition von der Dampfzuführleitung (und der Kupplungseinrichtung) getrennt wird, bevorzugt zusammen mit einer vorstehend erläuterten, fakultativen Haube zur Bildung eines Garraums. Besonders bevorzugt ist als weiterer Verfahrensschritt vorgesehen, dass die Dampfzuführeinheit ggf. die lösbar daran angeordnete Haube, insbesondere nach Ablösen der Haube gereinigt wird bzw. werden, insbesondere in einer Spülmaschine.

Weitere Vorteile, Merkmale und Einzelheiten der Erfindung ergeben sich aus der nachfolgenden Beschreibung bevorzugten Ausführungsbeispiele sowie anhand der Zeichnungen.

Diese zeigen in:
- Fig. 1: eine perspektivische Ansicht einer nach dem Konzept der Erfindung ausgebildeten Vorrichtung zum Aufbereiten von in einem Gefäß angeordneten Lebensmitteln, die zur Ausführung eines erfindungsgemäßen Verfahrens geeignet und bestimmt ist,
- Fig. 2: eine perspektivische Darstellung einer mittels eines Hubantriebs vertikal verfahrbaren Vorrichtungseinheit, an der eine Dampfzuführeinheit lösbar festgelegt ist,
- Fig. 3: eine Explosionsdarstellung einer Verriegelungsmittel umfassenden Kupplungseinrichtung zur Aufnahme der Dampfzuführeinheit,
- Fig. 4: eine Schnittansicht eines unteren Abschnitts der Kupplungseinrichtung,
- Fig. 5: eine perspektivische Darstellung der Kupplungseinrichtung im montierten Zustand von außen,
- Fig. 6: eine Darstellung einer Funktionseinheit der Kupplungseinrichtung, umfassend ein Verriegelungselement und ein durch Rotieren des Verriegelungselements translatorisch, vorliegend vertikal verstellbares Stellelement zur Wechselwirkung mit Sensormitteln,
- Fig. 7: die Funktionseinheit gemäß Fig. 6 im Zusammenspiel mit einem als Mikroschalter ausgebildeten Sensor,
- Fig.8a: eine Darstellung einer einen Schwenkhebel umfassenden Betätigungseinheit der Verriegelungsmittel sowie das mittels diesen verstellbare Verriegelungselement in einer Freigabeposition,
- Fig. 8b: die Konfiguration gemäß Fig. 8a in einer Verriegelungsposition,

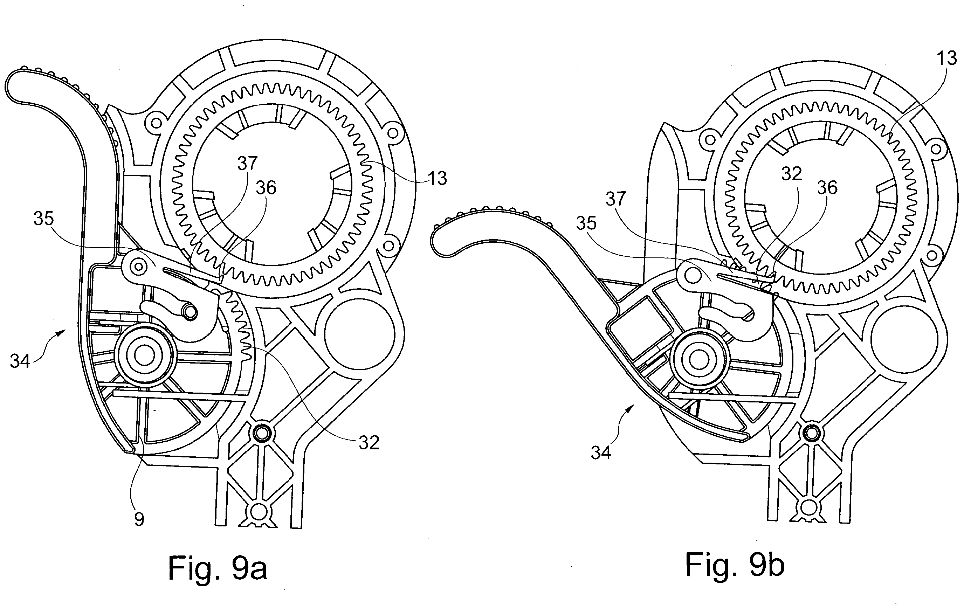

- Fig. 9a und Fig. 9: unterschiedliche Betriebszustände der Verriegelungsmittel mit integrierten Synchronisationsmitteln zur Synchronisation eines Zahnkranzes des Verriegelungselementes mit einem Verzahnungsabschnitt der Betätigungseinheit,
- Fig. 10: eine perspektivische Darstellung der Dampfzuführeinheit mit darauf aufgesetzter Haube zur Bildung eines Garraums mit einem das zu erwärmende Lebensmittel beinhaltenden Gefäß, und
- Fig. 11: eine Schnittansicht durch eine bevorzugte Ausführungsform der Dampfzuführeinheit.

In den Figuren sind gleiche Elemente und Elemente mit der gleichen Funktion mit den gleichen Bezugszeichen gekennzeichnet.

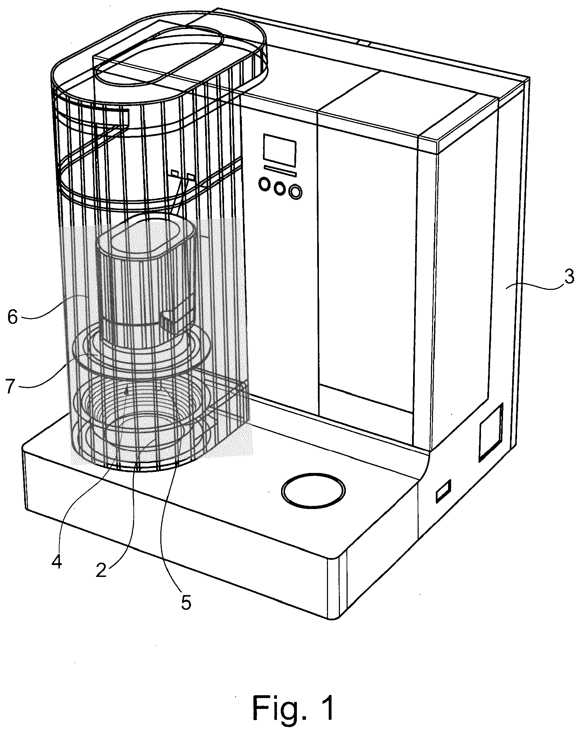

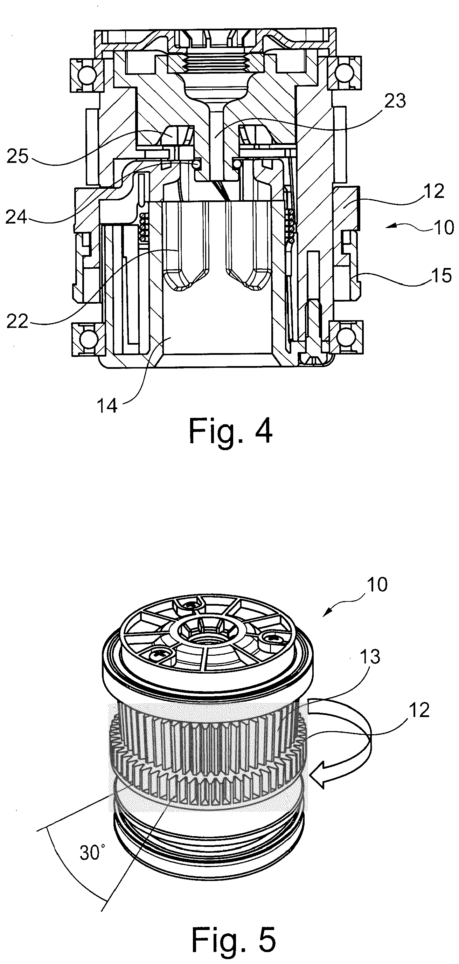

In Fig. 1 ist eine Vorrichtung 1 um Aufbereiten von in einem Gefäß 2 angeordneten Lebensmitteln gezeigt. Die Vorrichtung 1 umfasst ein Gehäuse 3 mit darin angeordneter aber nicht gezeigter Dampferzeugungseinheit und ggf. dieser nachgeordneter Dampfüberhitzungseinheit für die Bereitstellung von Dampf. Der Dampf kann je nach Ausführungsform der Vorrichtung 1 erzeugt werden aus in einem Wassertank der Vorrichtung bevorratetem Wasser und/oder von über einen Frischwasseranschluss zugeführtem Frischwasser. Die Dampferzeugungseinheit ist jedenfalls dampfleitend über eine nicht gezeigte Dampfversorgungsleitung (vgl. Bezugszeichen 23 in Fig. 4) verbunden mit einer Dampfzuführeinheit 4, die mehrere, langgestreckte Dampfsonden 5 mit jeweils mindestens einer Auslassöffnung bzw. Dampfabgabeöffnung aufweist. In dem gezeigten Ausführungsbeispiel ist eine mit dem Bezugszeichen 6 gekennzeichnete Hubeinheit mittels eines Hubantriebs entlang der Vertikalen translatorisch verstellbar zwischen der in Fig. 1 gezeigten Öffnungsposition, in der ein Gefäß unterhalb der Dampfzuführeinheit 4 anordnenbar und wieder entnehmbar ist und einer unteren Funktionsposition, in der eine auf der Dampfzuführeinheit 4 aufsitzende Haube 7 zur Bildung eines Garraums auf dem Gefäß 2 aufsitzt. Wie später noch erläutert werden wird ist die Dampfzuführeinheit 4 rotierbar um eine mit der vertikalen Verstellachse der Hubeinheit 6 zusammenfallende Rotationsachse, und zwar relativ zu der Haube 7.

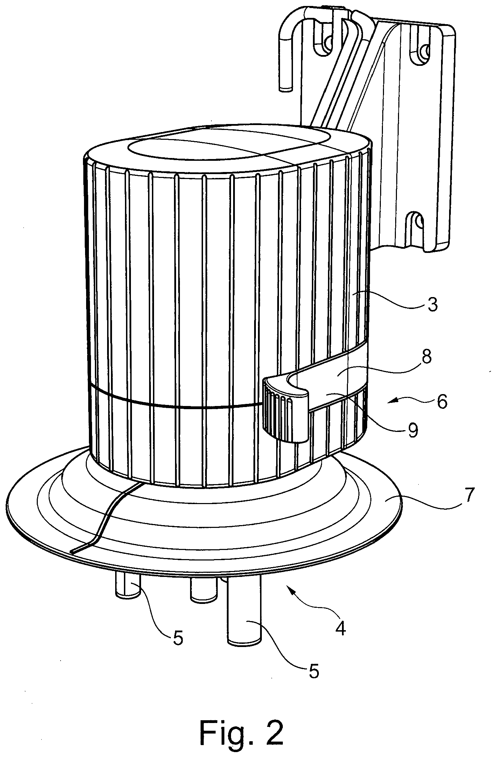

Fig. 2 zeigt eine vergrößerte Darstellung der Hubeinheit 6, an welcher die Dampfzuführeinheit 4 lösbar festgelegt ist. Die Hubeinheit 6 umfasst innenliegend eine im Folgenden noch zu erläuternde Kupplungseinrichtung zur Aufnahme der Dampfzuführeinheit 4, wobei die Dampfzuführeinheit 4 verriegelbar bzw. gegen Entnehmen sicherbar ist über Verriegelungsmittel, umfassend eine vorliegend manuelle, Betätigungseinheit 8 mit Schwenkhebel 9.

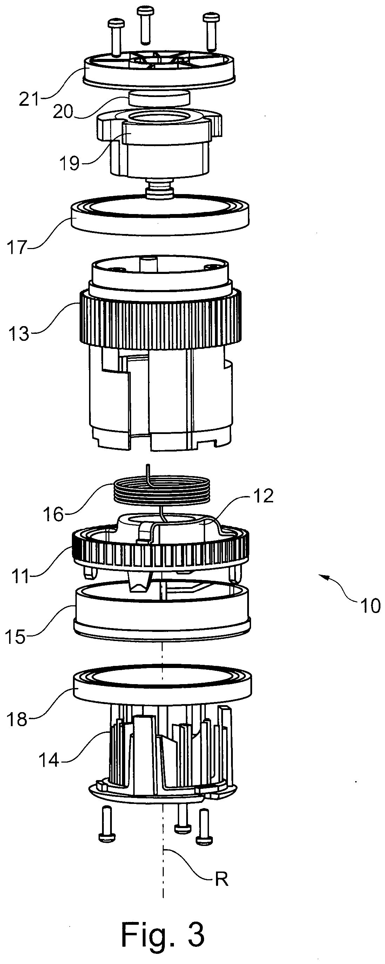

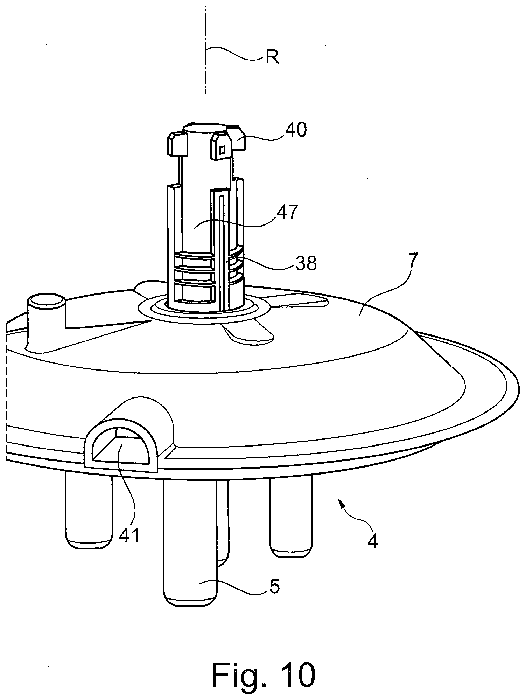

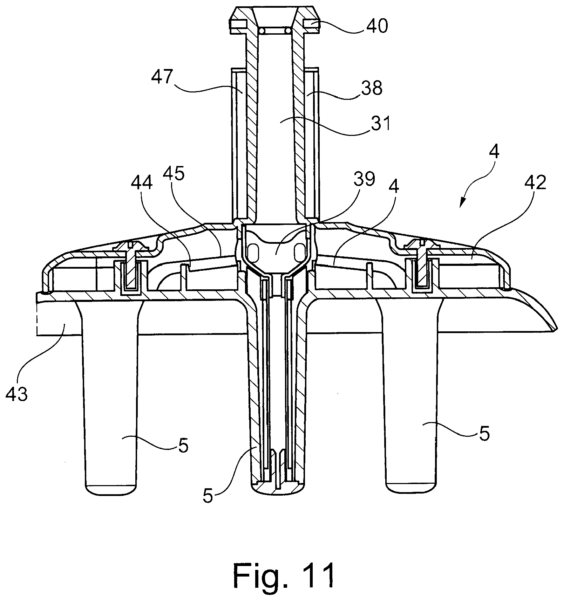

Fig. 3 zeigt in einer Explosionsdarstellung die vorerwähnte Kupplungseinrichtung 10. Die Kupplungseinrichtung 10 ist im verriegelten Zustand von Verriegelungsmitteln 11, genauer einem Verriegelungselement 12 rotierbar um eine Rotationsachse R. Zu diesem Zweck umfasst die Kupplungseinrichtung 10 einen Antriebszahnkranz 13, vorliegend als Bestandteil einer Lagerhülse. Der Antriebszahnkranz 13 ist im montierten Zustand fixiert bzw. drehfest angeordnet mit an einer Aufnahme 14 für einen langgestreckten Verbindungsabschnitt (vgl. Bezugszeichen 38 in Fig. 10 und 11) der Dampfzuführeinheit 4. Die Aufnahme 14 bildet zusammen mit dem Antriebszahnkranz 13 einen Bestandteil von Drehmomentübertragungsmitteln zur Übertragung eines Antriebsmomentes von einem nicht gezeigten, elektromotorischen Antriebsmotor im Gehäuse 3, vorliegend beispielhaft der Hubeinheit 6, vgl. Fig. 2 und der Dampfzuführeinheit 4. Die Aufnahme 14 greift hierzu radial in entsprechende Aussparungen im Antriebsabschnitt des Verbindungsabschnittes der Dampfzuführeinheit 4 ein, sodass diese beim Rotieren des Antriebszahnkranzes 13 in Umfangsrichtung um die Rotationsachse R rotiert wird, bevorzugt hin und her.

Ferner umfasst die Kupplungseinrichtung 10 das bereits erwähnte Verriegelungselement 12 zum Verriegeln bzw. Sichern der Dampfzuführeinheit 4 in der Kupplungseinrichtung 10. Zu diesem Zweck ist, wie in Fig. 5 dargestellt das Verriegelungselement 12 relativ zu dem Antriebszahnkranz 13 um einen begrenzten Umfangswinkel von hier beispielhaft 30° um die Rotationsachse R rotierbar, und zwar zwischen einer Verriegelungsposition und einer Freigabeposition. In der Verriegelungsposition ist das Verriegelungselement 12 gemeinsam bzw. in einer gekoppelten Bewegung synchron mit dem Antriebszahnkranz 13 um die Rotationsachse R rotierbar.

Wie später noch erläutert werden wird, wird über entsprechende Kulissenführungen ein Stellelement 15 beim Verstellen des Verriegelungselementes 12 zwischen der Freigabeposition und der Verriegelungsposition in axialer Richtung relativ zu einem Sensor 30 von Sensormitteln verstellt, um den Verriegelungszustand zu sensieren.

Wie sich aus Fig. 3 ergibt, ist dem Verriegelungselement 12 eine vorliegend als Torsionsfeder ausgebildete Feder 16 (Federmittel) zugeordnet, die das Verriegelungselement 12 in seine Verriegelungsposition federkraftbeaufschlagt.

Aus Fig. 3 ergibt sich wiederum, dass das Verriegelungselement 12, Antriebszahnkranz 13 sowie das fakultative Stellelement 15 axial aufgenommen sind zwischen zwei vorliegend beispielhaft als Rillenkugellager ausgebildeten Wälzlagern 17, 18. Die Wälzlager 17, 18 dienen zum radialen Abstützen der rotierbaren Kupplungseinrichtung 10 innerhalb der Hubeinheit 6.

Aus Fig. 3 ergibt sich weiter, dass axial in der den Antriebszahnkranz 13 umfassenden Lagerhülse ein Zentrierstück 19 aufgenommen ist mit innenliegender Rotationsdichtung 20, wobei das Zentrierstück 19 über einen mit der Lagerhülse verschraubten Verschlussdeckel 21 fixiert ist.

Fig. 4 zeigt einen Schnitt durch die Kupplungseinrichtung 10. Zu erkennen ist insbesondere die Aufnahme 14 oder mit nach radial innen weisenden Antriebsstegen 22 für die Drehmomentübertragung auf den eingeführten, nicht gezeigten Verbindungs- bzw. Antriebsabschnitt der Dampfzuführeinheit 4.

In der Kupplungseinrichtung 10 endet eine Dampfversorgungsleitung 23, die dampfleitend mit der Dampferzeugungseinheit verbunden ist. Diese weist am Umfang eine als O-Ringdichtung ausgebildete Ringdichtung 24 auf, zur radialen Abdichtung gegenüber einem, insbesondere zentralen Dampfleitungsabschnitt im Verbindungsabschnitt der in der gezeigten Darstellung demontierbaren Dampfzuführeinheit 4.

Zu erkennen ist auch das Verriegelungselement 12, welches einen darüber angeordneten Verriegelungsraum 25 in der Verriegelungsposition begrenzt bzw. sperrt und diesen Raum freigibt in der Freigabeposition, sodass die Dampfzuführeinheit 4 axial entnehmbar ist.

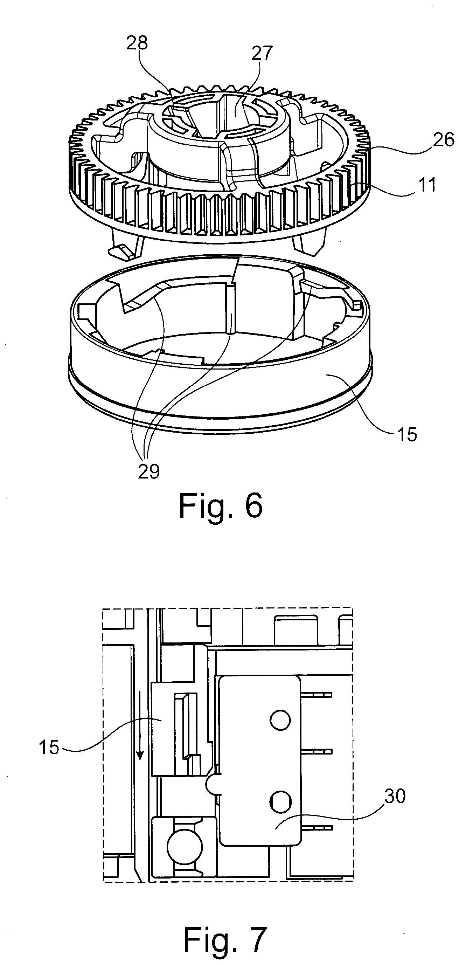

Fig. 6 und 7 zeigen nun weitere Details zur Detektion bzw. Sensierung eines Zustandes der Verriegelungsmittel 11. Zu erkennen ist das Verriegelungselement 12 mit seinem am Außenumfang angeordneten Zahnkranz 26. Ferner zu erkennen ist ein axialer Durchgangskanal 27 mit vorliegend beispielhaft vier kreuzförmig angeordneten Radialabschnitten 28, durch die ein formkongruent ausgebildeter Verbindungsabschnitt der Dampfzuführeinheit 4 in der Freigabeposition durchführbar ist, und zwar mit einem Verriegelungsabschnitt in den Verriegelungsraum 25 gemäß Fig. 4 hinein. Durch Rotieren des Verriegelungselementes 12 werden dann die Radialabschnitte 28 zu den formkongruenten Abschnitten des Verbindungsabschnittes bzw. Verriegelungsabschnittes rotiert bzw. versetzt, sodass dieser nicht wieder entgegen der Montagerichtung entnommen werden kann.

Durch Rotieren des Verriegelungselementes 12 wird das Stellelement 15 axial entlang der Rotationsachse verstellt, und zwar über entsprechende Kulissenführungen 29 je nach Drehrichtung nach oben oder nach unten. Durch axiales Verstellen des Stellelementes 15 nach unten gelangt dieses, wie aus Fig. 7 erkennbar ist, in Wechselwirkung mit einem als Mikroschalter ausgebildeten Sensor 30 von Sensormitteln zur Detektion eines Zustandes (verriegelt und/oder entriegelt) der Verriegelungsmittel. Nicht gezeigt sind weitere Sensormittel zum Erkennen der Dampfzuführeinheit 4 in ihrer Montageposition. Auch hier ist der Einsatz eines Druckschalters denkbar, jedoch auch andere Sensoren, wie beispielsweise ein Magnetsensor, etc.

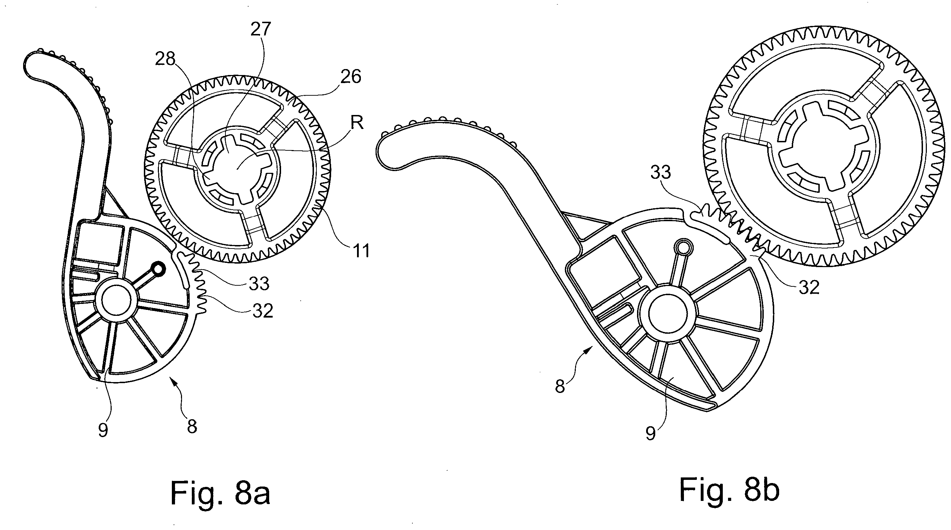

Zum Verstellen des Verriegelungselementes 12 zwischen seiner Freigabeposition (vgl. Fig. 8a) in eine in Fig. 8b gezeigte Verriegelungsposition ist eine Betätigungseinheit 8 vorgesehen, die vorliegend manuell betätigbar ist. Die Betätigungseinheit 8 umfasst den bereits erwähnten Schwenkhebel 9, der zwischen zwei Positionen verschwenkbar ist, nämlich der in Fig. 8a gezeigten ersten Schwenkposition, in der ein Verzahnungsabschnitt 32 außer Eingriff ist mit dem Verriegelungselement 12 und damit der Kupplungseinrichtung 10, sodass die Kupplungseinrichtung 10 um die Rotationsachse R frei drehen kann. In der in Fig. 8b gezeigten zweiten Position ist der Verzahnungsabschnitt 32 in Eingriff mit den Zähnen des Zahnkranzes 26 des Verriegelungselementes 12.

Der Verzahnungsabschnitt 32 ist in einem Federabschnitt 33 in radialer Richtung federnd ausgebildet, um somit ein Springen relativ zu dem bzw. auf dem Zahnkranz 26 bzw. dem Verriegelungselement 12 zu ermöglichen, wenn bei Verzahnungsabschnitt 32 und Zahnkranz 26 Zahn auf Zahn treffen sollte.

Um das Risiko des Treffens von Zahn auf Zahn zu minimieren, umfasst die Vorrichtung 1 vorliegend Synchronisationsmittel 34, mit denen die Kupplungseinrichtung 10 ein Stück weit rotierbar ist, um die Verzahnung des Verzahnungsabschnittes 32 und die Verzahnung des Zahnkranzes 26 vor einem kämmenden Ineinandergreifen zu synchronisieren. Zu diesem Zweck können die Synchronisationsmittel 34 entweder unmittelbar mit dem Zahnkranz 26 des Verriegelungselementes 12 wechselwirkend oder, was bevorzugt und vorliegend realisiert ist, mit dem Antriebszahnkranz 13.

Vorliegend umfassen die Synchronisationsmittel 34 ein als Sperrhebel 35 fungierendes, hakenförmiges Synchronisierungselement, das bei Betätigung des Schwenkhebels 9 die Lagerhülse bzw. den Antriebszahnkranz 13 blockiert. Der Eingriff erfolgt mittels eines Zahns 36 des Synchronisierungselementes der einen Endabschnitt eines in radialer Richtung bezogen auf den Antriebszahnkranz 13 federnd ausgebildeten Hakens 37 ist.

Fig. 10 zeigt ausschnittsweise eine bevorzugte Ausführungsform der Dampfzuführeinheit 4 mit ihren sich entlang der Rotationsachse R erstreckenden Dampfsonden 5, die endseitig Dampfaustrittsöffnungen aufweisen. Auf der Dampfzuführeinheit 4 sitzt vorliegend in einer bevorzugten Ausführungsform lose die Haube 7 auf, die von dem Verbindungsabschnitt 38 der Dampfzuführeinheit 4 axial durchsetzt ist. Der Verbindungsabschnitt 38 umfasst einen (unteren) Antriebsabschnitt 47 zur drehmomentübertragenden Kopplung mit der Aufnahme 14, d.h. den Drehmomentsübergangsmitteln der Kupplungseinrichtung 10 (vgl. Fig. 3 und 4) sowie einen endseitigen Verriegelungsabschnitt 40, der in der Freigabeposition des Verriegelungselementes 12 durch den Durchgangskanal 27 hindurchführbar ist und der von dem Verriegelungselement 12 gehalten bzw. blockiert wird in dessen Verriegelungsposition. Verriegelungsabschnitt 40 und Antriebsabschnitt 47 sind axial voneinander beabstandet, wobei der Verrieglungsabschnitt 40 des Verbindungsabschnittes 30 dessen axiales, freies Ende bildet. Der Abstand zwischen Antriebsabschnitt 47 und Verriegelungsabschnitt 40 ist nut- bzw. rinnenförmig ausgestaltet, wobei in diesen Abstand das Verriegelungselement 12 eingreift, um in seiner Verrieglungsposition die Dampfzuführeinheit gegen axiales Entnehmen zu sichern.

Aus Fig. 10 ist zu erkennen, dass die Haube 7 einen seitlichen Auslass 41 für überschüssigen Dampf während des Erwärmungsvorgangs aufweist.

Fig. 11 zeigt in einer Schnittansicht die Dampfzuführeinheit 4. Diese ist mehrteilig ausgebildet und umfasst ein Deckelteil 42 aus Kunststoff, welches an einem ebenfalls aus Kunststoff ausgebildeten Unterteil 43, vorliegend beispielhaft durch Verschrauben festgelegt ist. Das Unterteil 43 umfasst die Vielzahl von Sonden 5, in die Dampf eingeleitet wird über Dampfverteilleitungen 44, die innerhalb eines von dem Deckelteil 42 und dem Unterteil 43 begrenzten Dampfverteilerraum 45 angeordnet sind, und die die Dampfsonden 5 mit einem Verteilerabschnitt 39 einer zentralen Dampfleitung 31 im Verbindungsabschnitt 38 verbinden, die bei in der Kupplungseinrichtung 10 montierter Dampfzuführeinheit 4 dampfleitend verbunden ist mit der Dampfversorgungsleitung 23 (vgl. Fig. 4) relativ zu der die Dampfleitung 31 (zusammen mit der restlichen Dampfzuführeinheit 4) rotierbar ist. Die Dampfverteilerleitungen 44 sowie der Verteilerabschnitt 39 sind aus Metall ausgebildet.

### Bezugszeichen

- 1: Vorrichtung
- 2: Gefäß
- 3: Gehäuse
- 4: Dampfzuführeinheit
- 5: Dampfsonde(n)
- 6: Hubeinheit
- 7: Haube
- 8: Betätigungseinheit
- 9: Schwenkhebel der Betätigungseinheit
- 10: Kupplungseinrichtung
- 11: Verriegelungsmittel
- 12: Verriegelungselement
- 13: Antriebszahnkranz
- 14: Aufnahme
- 15: Stellelement
- 16: Feder
- 17: Wälzlager
- 18: Wälzlager
- 19: Zentrierstück
- 20: Rotationsdichtung
- 21: Verschlussdeckel
- 22: Antriebsstege
- 23: Dampfversorgungsleitung
- 24: Ringdichtung
- 25: Verriegelungsraum
- 26: Zahnkranz
- 27: Durchgangskanal
- 28: Radialabschnitte
- 29: Kulissenführung
- 30: Sensor
- 31: Dampfleitung
- 32: Verzahnungsabschnitt
- 33: Federabschnitt
- 34: Synchronisationsmittel
- 35: Sperrhebel
- 36: Zahn
- 37: Haken
- 38: Verbindungsabschnitt
- 39: Verteilerabschnitt
- 40: Verriegelungsabschnitt
- 41: Auslass
- 42: Deckelteil
- 43: Unterteil
- 44: Dampfverteilleitungen
- 45: Dampfverteilerraum
- 47: Antriebsabschnitt

- R: Rotationsachse

## Patentansprüche

1. Vorrichtung zum Aufbereiten von in einem Gefäß (2) aufgenommenen Lebensmitteln, insbesondere von Fertiggerichten, umfassend eine Dampferzeugungseinheit zum Erzeugen von Dampf, sowie eine mit der Dampferzeugungseinheit dampfleitend über eine Dampfversorgungsleitung (23) verbundene Dampfzuführeinheit (4) mit einer mindestens eine Dampfabgabeöffnung aufweisenden Dampfsonde (5), wobei die Vorrichtung (1) eine Verriegelungsmittel (11) umfassende Kupplungseinrichtung (10) zum lösbaren Verbinden der Dampfzuführeinheit (4) mit der Dampfversorgungsleitung (23) aufweist, und wobei zumindest ein die Dampfsonde (5) umfassender Teilabschnitt der Dampfzuführeinheit (4) um eine Rotationsachse (R) rotierbar ist,
**dadurch gekennzeichnet, dass**
die Kupplungseinrichtung (10) Drehmomentübertragungsmittel zum Übertragen eines Antriebsdrehmomentes auf die Dampfzuführeinheit (4) im mit der Dampfversorgungsleitung (23) dampfleitend verbundenen Zustand aufweist.

2. Vorrichtung nach Anspruch 1,
**dadurch gekennzeichnet,**
**dass** die gesamte Dampfzuführeinheit (4) um die Rotationsachse (R) hin und her rotierbar ist.

3. Vorrichtung nach Anspruch 1 oder 2,
**dadurch gekennzeichnet,**
**dass** an der Dampfzuführeinheit (4) eine, bevorzugt von einem mit der Kupplungseinrichtung (10) verbindbaren Verbindungsabschnitt (38) der Dampfzuführeinheit (4), insbesondere entlang der Rotationsachse (R), durchsetzen, Haube zum Bilden eines Garraums zusammen mit dem Gefäß (2) angeordnet ist, die zusammen mit Dampfzuführeinheit (4) nach Lösen der Verriegelungsmittel (12) entnehmbar ist.

4. Vorrichtung nach einem der vorhergehenden Ansprüche,
**dadurch gekennzeichnet,**
**dass** die Verriegelungsmittel (11) zum selbsttätigen Verriegeln, insbesondere axialen Sichern, der Dampfzuführeinheit (4) durch Überführen der Dampfzuführeinheit (4) in eine Fixierposition ausgebildet sind.

5. Vorrichtung nach einem der vorhergehenden Ansprüche,
**dadurch gekennzeichnet,**
**dass** die Verriegelungsmittel (11) ein Verriegelungselement (12) umfassen, das bevorzugt durch Rotieren, zwischen einer Verriegelungsposition und einer Freigabeposition verstellbar ist, und dass das Verriegelungselement (12) durch manuelles oder automatisches Verstellen einer, insbesondere einen Schwenkhebel (9) umfassenden Betätigungseinheit (8), zwischen seiner Verriegelungsposition und seiner Freigabeposition verstellbar ist.

6. Vorrichtung nach Anspruch 5,
**dadurch gekennzeichnet,**
**dass** die Betätigungseinheit (8) lösbar kraftübertragend mit dem Verriegelungselement (12) koppelbar ist und dass die Betätigungseinheit (8) in der Verriegelungsposition von dem Verriegelungselementes (12) entkoppelt ist und dadurch das Verriegelungselement (12), bevorzugt zusammen mit der Dampfzuführeinheit (4) rotierbar ist.

7. Vorrichtung nach Anspruch 6,
**dadurch gekennzeichnet,**
**dass** die Betätigungseinheit (8) einen, bevorzugt federnd ausgebildeten und/oder angeordneten, Verzahnungsabschnitt (32) zum Kämmen mit einem Zahnkranz (26) des Verriegelungselementes (12) aufweist.

8. Vorrichtung nach Anspruch 7,
**dadurch gekennzeichnet,**
**dass** dem Verzahnungsabschnitt (32) Synchronisationsmittel (34) zum Synchronisieren einer Verzahnung des Verzahnungsabschnittes (32) und einer Verzahnung des Zahnkranzes (26), insbesondere durch Verstellen der Betätigungseinheit (8) zugeordnet sind.

9. Vorrichtung nach Anspruch 8,
**dadurch gekennzeichnet,**
**dass** die Synchronisierungsmittel (34) ein, insbesondere federnd ausgebildetes und/oder angeordnetes, bevorzugt hakenförmiges, Synchronisationselement mit mindesten einen Synchronisationszahn zum Kämmen mit dem Zahnkranz (26) des Verriegelungselementes (12) oder mit einem drehfest relativ zu dem Zahnkranz (26) angeordneten, fakultativen Antriebszahnkranz (13) zum rotierenden Antreiben der Dampfzuführeinheit (4) aufweist, und dass der Synchronisationszahn zu den Zähnen (36) des Verzahnungsabschnittes (32) um eine Strecke versetzt angeordnet ist, die nicht geradzahlig durch eine Zahnerstreckung eines Zahns (36) der Verzahnung des Verzahnungsabschnittes (32) teilbar ist.

10. Vorrichtung nach einem der vorhergehenden Ansprüche,
**dadurch gekennzeichnet,**
**dass** Sensormittel zum Überwachen eines Zustandes der Verriegelungsmittel (11) und/oder des Vorhandenseins der Dampfzuführeinheit (4) in einer an der Dampfzuführleitung (23) angeschlossenen Montageposition vorgesehen sind.

11. Vorrichtung nach Anspruch 10,
**dadurch gekennzeichnet,**
**dass** den Sensormittel ein, bevorzug kulissengeführtes, Stelleelement (15) zugeordnet ist, das durch Betätigen der Verriegelungsmittel (11), insbesondere durch Rotieren des Verriegelungselementes (12), relativ, bevorzugt axial, zu einem Sensor der Sensormitteln, insbesondere zum Betätigen eines Schalters der Sensormittel, verstellbar ist.

12. Vorrichtung nach einem der vorhergehenden Ansprüche,
**gekennzeichnet,**
**durch** einen Relativbewegungsantrieb, insbesondere Hubantrieb, zum Bewirken einer translatorischen Relativbewegung zwischen Dampfzuführeinheit (4) und dem Gefäß (2), insbesondere durch Verstellen der Dampfzuführeinheit (4) relativ zu dem fest positionieren Gefäß (2).

13. Vorrichtung nach einem der vorhergehenden Ansprüche,
**dadurch gekennzeichnet,**
**dass** die Dampfzuführeinheit (4) ein mehrere Dampfsonden (5) aufweisendes Unterteil (43) aufweist, das mit einem daran festgelegten Deckelteil (42) einen Dampfverteilerraum (45) begrenzt, in dem der Dampf auf die mehrere Dampfsonden (5) verteilbar ist.

14. Verfahren zum Betreiben einer Vorrichtung (1) nach einem der vorhergehenden Ansprüche,
**dadurch gekennzeichnet,**
**dass** die Dampfzuführeinheit (4) nach, insbesondere manuellem, Lösen der Verriegelungsmittel (11) von der Dampfzuführleitung (23) getrennt und bevorzugt danach gereinigt wird, insbesondere in einer Spülmaschine, wobei zumindest ein die Dampfsonde (5) umfassender Teilabschnitt der Dampfzuführeinheit (4) um eine Rotationsachse (R) rotiert wird und die Kupplungseinrichtung (10) Drehmomentübertragungsmittel zum Übertragen eines Antriebsdrehmomentes auf die Dampfzuführeinheit (4) im mit der Dampfversorgungsleitung (23) dampfleitend verbundenen Zustand aufweist.

15. Verfahren nach Anspruch 14,
**dadurch gekennzeichnet,**
**dass** die Dampfzuführeinheit (4) zusammen mit der, insbesondere lose auf dieser aufsitzenden Haube (7) von der Dampfzuführleitung (23) entfernt wird.

## Claims

1. A device for preparing foods received in a vessel (2), in particular ready meals, said device comprising a steam generator unit for generating steam, and a steam delivery unit (4) which is connected to the steam generator unit in a steam-conducting manner via a steam feed line (23) and which has a steam probe (5) having at least one steam discharge opening,
the device (1) having a coupling mechanism (10) which comprises locking means (11) and which connects the steam delivery unit (4) to the steam feed line (23) in a releasable manner, and at least a section of the steam delivery unit (4) comprising the steam probe (5) being rotatable about an axis of rotation (R),
**characterized in that**
the coupling mechanism (10) has torque transmission means for transmitting a drive torque to the steam delivery unit (4) when said steam delivery unit is connected to the steam feed line (23) in a steam-conducting manner.

2. The device according to claim 1,
**characterized in that**
the entire steam delivery unit (4) is rotatable back and forth about the axis of rotation (R).

3. The device according to claim 1 or 2,
**characterized in that**
a hood for realizing a cooking chamber together with the vessel (2) is disposed on the steam delivery unit (4), said hood being preferably penetrated, in particular along the axis of rotation (R), by a connecting section (38) of the steam delivery unit (4) which can be connected to the coupling mechanism (10) and said hood being removable together with the steam delivery unit (4) after unlocking the locking means (11).

4. The device according to any one of the preceding claims,
**characterized in that**
the locking means (11) are realized for automatic locking, in particular axial securing, of the steam delivery unit (4) by transferring the steam delivery unit (4) into a fixing position.

5. The device according to any one of the preceding claims,
**characterized in that**
the locking means (11) comprise a locking element (12) which can be displaced, preferably by rotating, between a locking position and a release position, and that the locking element (12) can be displaced between its locking position and its release position by manual or automatic displacement of an actuation unit (8) in particular comprising a swing lever (9).

6. The device according to claim 5,
**characterized in that**
the actuation unit (8) can be coupled with the locking element (12) in a releasable and force-transmitting manner and that the actuation unit (8) is decoupled from the locking element (12) in the locking position, the locking element (12) thus being rotatable, preferably together with the steam delivery unit (4).

7. The device according to claim 6,
**characterized in that**
the actuation unit (8) has a gearing section (32) for meshing with a gear ring (26) of the locking element (12), said gearing section being preferably realized and/or disposed in a resilient manner.

8. The device according to claim 7,
**characterized in that**
synchronization means (34) for synchronizing a gearing of the gearing section (32) and a gearing of the gear ring (26), in particular by displacing the actuation unit (8), are assigned to the gearing section (32).

9. The device according to claim 8,
**characterized in that**
the synchronization means (34) have a preferably hook-shaped synchronization element, in particular realized and/or disposed in a resilient manner, said synchronization element having at least one synchronization tooth for meshing with the gear ring (26) of the locking element (12) or with a facultative drive gear ring (13) for rotating driving of the steam delivery unit (4), said drive gear ring being disposed in a non-rotatable manner in relation to the gear ring (26), and that the synchronization tooth is offset in relation to the teeth (36) of the gearing section (32) by a distance which is not evenly divisible by a tooth extension of a tooth (36) of the gearing of the gearing section (32).

10. The device according to any one of the preceding claims,
**characterized in that**
sensor means for monitoring a state of the locking means (11) and/or the presence of the steam delivery unit (4) are provided in an installation position which is connected to the steam feed line (23).

11. The device according to claim 10,
**characterized in that**
a preferably slot-guided positioning element (15) is assigned to the sensor means, said positioning element being displaceable by actuating the locking means (11), in particular by rotating the locking element (12), in relation, preferably axially, to a sensor of the sensor means, in particular for actuating a switch of the sensor means.

12. The device according to any one of the preceding claims,
**characterized by**
a relative movement drive, in particular a lift drive, for causing a translational relative movement between the steam delivery unit (4) and the vessel (2), in particular by displacing the steam delivery unit (4) in relation to the fixed vessel (2).

13. The device according to any one of the preceding claims,
**characterized in that**
the steam delivery unit (4) has a lower part (43) having several steam probes (5), said lower part limiting a steam distribution chamber (45) together with a lid part (42) fixed thereto, the steam being distributable to the several steam probes (5) in said steam distribution chamber.

14. A method for operating a device (1) according to any one of the preceding claims,
**characterized in that**
after the, preferably manual, unlocking of the locking means (11), the steam delivery unit (4) is separated from the steam feed line (23) and is preferably cleaned afterwards, in particular in a dishwasher, at least a section of the steam delivery unit (4) comprising the steam probe (5) being rotated about an axis of rotation (R) and the coupling mechanism (10) having torque transmission means for transmitting a drive torque to the steam delivery unit (4) when said steam delivery unit is connected to the steam feed line (23) in a steam-conducting manner.

15. The method according to claim 14,
**characterized in that**
the steam delivery unit (4) is removed from the steam feed line (23) together with the hood (7), said hood in particular sitting loosely on said steam delivery unit.

## Revendications

1. Dispositif de préparation de produits alimentaires, notamment de plats cuisinés, reçus dans un récipient (2), ledit dispositif comprenant une unité de génération de vapeur destinée à générer de la vapeur et une unité (4) d'alimentation en vapeur qui est reliée à l'unité de génération de vapeur de manière à conduire de la vapeur via une conduite (23) d'alimentation en vapeur et qui comprend une sonde de vapeur (5) ayant au moins une ouverture de décharge de vapeur, le dispositif (1) ayant un dispositif d'accouplement (10) qui est destiné à relier de manière amovible l'unité (4) d'alimentation en vapeur à la conduite (23) d'alimentation en vapeur et qui comprend des moyens de verrouillage (11), au moins un tronçon de l'unité (4) d'alimentation en vapeur comprenant la sonde de vapeur (5) pouvant être tourné autour d'un axe de rotation (R),
**caractérisé en ce que**
le dispositif d'accouplement (10) a des moyens de transmission de couple destinés à transmettre un couple d'entraînement à l'unité (4) d'alimentation en vapeur lorsque l'unité (4) d'alimentation en vapeur est reliée à la conduite (23) d'alimentation en vapeur de manière à conduire de la vapeur.

2. Dispositif selon la revendication 1,
**caractérisé en ce que**
l'unité (4) d'alimentation en vapeur entière peut être tournée dans les deux sens autour de l'axe de rotation (R).

3. Dispositif selon la revendication 1 ou la revendication 2,
**caractérisé en ce**
**qu'**un capot destiné à réaliser un espace de cuisson conjointement avec le récipient (2) est disposé sur l'unité (4) d'alimentation en vapeur, le capot, de préférence, étant pénétré, notamment le long de l'axe de rotation (R), par une partie de liaison (38) de l'unité (4) d'alimentation en vapeur qui peut être reliée au dispositif d'accouplement (10), le capot pouvant être retiré conjointement avec l'unité (4) d'alimentation en vapeur après le déverrouillage des moyens de verrouillage (12).

4. Dispositif selon l'une quelconque des revendications précédentes,
**caractérisé en ce que**
les moyens de verrouillage (11) sont réalisés pour le verrouillage automatique, notamment pour la fixation axiale, de l'unité (4) d'alimentation en vapeur (4) par le transfert de l'unité (4) d'alimentation en vapeur dans une position de fixation.

5. Dispositif selon l'une quelconque des revendications précédentes,
**caractérisé en ce que**
les moyens de verrouillage (11) comprennent un élément de verrouillage (12) qui peut être déplacé, de préférence par rotation, entre une position de verrouillage et une position de déverrouillage, et que l'élément de verrouillage (12) peut être déplacé entre sa position de verrouillage et sa position de déverrouillage par un déplacement manuel ou automatique d'une unité d'actionnement (8) qui comprend notamment un levier pivotant (9).

6. Dispositif selon la revendication 5,
**caractérisé en ce que**
l'unité d'actionnement (8) peut être couplée à l'élément de verrouillage (12) de manière amovible et de manière à transmettre de la force et que l'unité d'actionnement (8) est découplée de l'élément de verrouillage (12) dans la position de verrouillage et l'élément de verrouillage (12) peut ainsi être tourné, de préférence conjointement avec l'unité (4) d'alimentation en vapeur.

7. Dispositif selon la revendication 6,
**caractérisé en ce que**
l'unité d'actionnement (8) a une partie de denture (32) qui est destinée à l'engrènement avec une couronne dentée (26) de l'élément de verrouillage (12), la partie de denture (32) étant, de préférence, réalisée et/ou disposée de manière élastique.

8. Dispositif selon la revendication 7,
**caractérisé en ce que**
des moyens de synchronisation (34) destinés à synchroniser une denture de la partie de denture (32) et une denture de la couronne dentée (26), notamment par un déplacement de l'unité d'actionnement (8), sont assignés à la partie de denture (32).

9. Dispositif selon la revendication 8,
**caractérisé en ce que**
les moyens de synchronisation (34) ont un élément de synchronisation qui est, de préférence, en forme de crochet, qui est, notamment, réalisé et/ou disposé de manière élastique et qui a au moins une dent de synchronisation destinée à l'engrènement avec la couronne dentée (26) de l'élément de verrouillage (12) ou avec une couronne (13) dentée d'entraînement facultative qui est disposée de manière solidaire en rotation par rapport à la couronne dentée (26) et qui est destinée à l'entraînement rotatif de l'unité (4) d'alimentation en vapeur, et que la dent de synchronisation est décalée par rapport aux dents (36) de la partie de denture (32) d'une distance qui n'est pas divisible en nombre pair par une extension d'une dent (36) de la denture de la partie de denture (32).

10. Dispositif selon l'une quelconque des revendications précédentes,
**caractérisé en ce que**
des moyens de capteur destinés à surveiller un état des moyens de verrouillage (11) et/ou la présence de l'unité (4) d'alimentation en vapeur sont prévus dans une position de montage qui est reliée à la conduite (23) d'alimentation en vapeur.

11. Dispositif selon la revendication 10,
**caractérisé en ce**
**qu'**un élément de positionnement (15), de préférence guidé par coulisse, est assigné aux moyens de capteur, l'élément de positionnement étant déplaçable par l'actionnement des moyens de verrouillage (11), notamment par la rotation de l'élément de verrouillage (12), par rapport à, de préférence axialement, à un capteur des moyens de capteur, notamment pour l'actionnement d'un interrupteur des moyens de capteur.

12. Dispositif selon l'une quelconque des revendications précédentes,
**caractérisé par**
un entraînement de mouvement relatif, notamment un entraînement de levage, qui est destiné à effectuer un mouvement relatif de translation entre l'unité (4) d'alimentation en vapeur et le récipient (2), notamment par le déplacement de l'unité (4) d'alimentation en vapeur par rapport au récipient (2) qui a une position fixe.

13. Dispositif selon l'une quelconque des revendications précédentes,
**caractérisé en ce que**
l'unité (4) d'alimentation en vapeur a une partie inférieure (43) qui a plusieurs sondes de vapeur (5), la partie inférieure (43) limitant une chambre (45) de distribution de vapeur avec une partie de couvercle (42) fixée à ladite partie inférieure (43), la vapeur pouvant être distribuée aux plusieurs sondes de vapeur (5) dans la chambre (45) de distribution de vapeur.

14. Procédé de fonctionnement d'un dispositif (1) selon l'une quelconque des revendications précédentes,
**caractérisé en ce que**
l'unité (4) d'alimentation en vapeur est séparée de la conduite (23) d'alimentation en vapeur après le déverrouillage, notamment manuel, des moyens de verrouillage (11) et est, de préférence, nettoyée après la séparation, notamment dans un lave-vaisselle, dans lequel au moins un tronçon de l'unité (4) d'alimentation en vapeur comprenant la sonde de vapeur (5) est tourné autour d'un axe de rotation (R) et le dispositif d'accouplement (10) a des moyens de transmission de couple destinés à transmettre un couple d'entraînement à l'unité (4) d'alimentation en vapeur lorsque l'unité (4) d'alimentation en vapeur est reliée à la conduite (23) d'alimentation en vapeur de manière à conduire de la vapeur.

15. Procédé selon la revendication 14,
**caractérisé en ce que**
l'unité (4) d'alimentation en vapeur est enlevé de la conduite (23) d'alimentation en vapeur conjointement avec le capot (7) qui repose lâchement sur l'unité (4) d'alimentation en vapeur.
